# EUROPEAN PATENT APPLICATION

(11) **EP 1 306 964 A1**
(43) Date of publication of application: **02.05.2003**
(21) Application number: 01830674.6
(22) Date of filing: 29.10.2001
(51) Int. Cl.: H02M 5/27, H02M 1/08, H02P 7/632

(54) **Control method for an AC-AC matrix converter**

(71) Applicant: Phase Motion Control S.r.l., 16141 Genova (IT); IRCI-International Rectifier Corporation Italiana Spa, 10071 Borgaro Torinese (TO) (IT)
(72) Inventor: Calvini, Marco, 16143 Genova (IT); Matteini, Marco, 47900 Rimini (IT)
(74) Representative: Monti, Umberto

(57) **Abstract**

The invention discloses an improved method for controlling the commutation in a multi-input-phase (1, 2, .. n) to single-output-phase (U) direct AC-AC converter comprising an array of bi-directional static switches (BS1, .. BSn) based upon the knowledge of the output load current sign and of the input phase voltages. The method provides for a 3-step switching sequence for switching the output line (U) from one input phase (1, 2, .. n) to another (Fig. 1).

## Description

The present invention relates to an improved control method for operating bi-directional switches in AC-AC power converters, and more particularly in AC-AC power converters provided with a plurality of inputs and a single output, also known as multi-input-phase to single-output phase forced commutated direct AC-AC power converters.

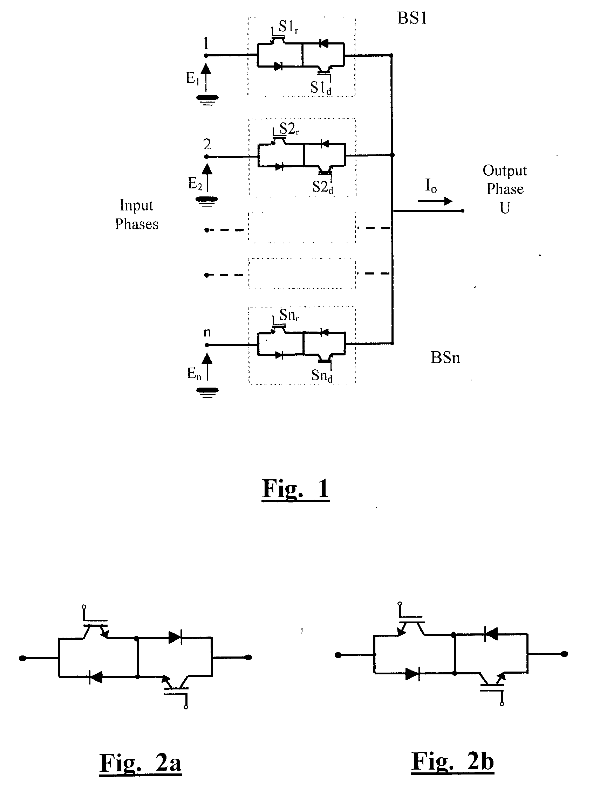

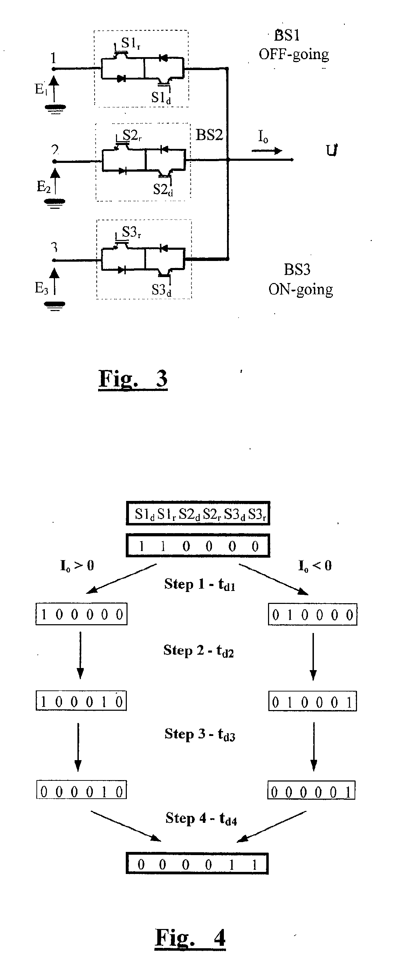

One of such devices is schematically shown in Fig. 1 of the attached drawings and comprises n input lines or phases 1, 2, 3 on which corresponding voltages El - En are applied and a single output line or phase connected to the input phases through groups of bi-directional switch arrangements (indicated with S1r - S1d .. Snr - Snd, ), each bi-directional switch comprising two anti-parallel unidirectional switches (or controlled switching devices) with self-turn-off capability and two fast recovery diodes. In this configuration separated internal conduction paths exist in the two possible direction of the output current Io and these paths can be independently controlled. Two of such known arrangements are shown in Fig.s 2a and 2b, respectively in a common emitter configuration and a common collector configuration for the case in which the controlled switching devices are transistors. A particular converter to which reference will be made in the description is shown in Fig. 3 and comprises 3 input phases connected to one single output phase through 3 bi-directional such arrangements generally indicated by BS1 - BS3.

One of the main obstacle to the industrial success of such forced commutated direct AC-AC power converters resides in the practical problems related to the implementation of the bi-directional switch and the relevant commutation and protection issues.

In a direct AC-AC power converter (matrix converter) such as the one shown in Fig.1 or 3, when switching the output phase from one input phase to another, there has to be prevented: 1) causing a short circuit between the two input phases since the consequent high circulating current might destroy the switches; and 2) causing an interruption of the output current since the consequent overvoltage might likely destroy the switches.

Therefore, in order to carry out a safe commutation, either the voltage between the involved bi-directional switches or the output current (and preferably both) must be measured, and a proper switching sequence, i.e. the operation of the devices in the concerned bi-directional switches, is then determined in accordance with the quantity/ies measured.

Mainly with regards to the well-known three-phase to three-phase matrix converter topology, and again referring for simplicity sake to a matrix converter such as the one shown in Fig.3, several commutation sequences have been proposed relying on the same above mentioned basic requirements, i.e. to eliminate those combinations of the switching devices that may lead to the hazard of a short circuit or of an interruption of the output current Io.

N. Burany, in "Safe Control of Four-Quadrant Switches," Conference Records of IEEE-IAS Annual Meeting, 1989, pp. 1190-1194 discloses a commutation strategy made up by a four-step switching sequence based on the detection of the output current sign. as will be discussed with reference to the diagrams shown in Fig.s 3and 4 for a 3-inputs 1-output converter.

When the output phase has to be connected to an input phase, both the switches of the correspondent BS (bi-directional switch) are turned on. When a commutation of the output phase between two input lines is required, a four-step staggered switching sequence is applied. In order to have the desired switching sequence a time step delay must be introduced which must be greater than the maximum possible delay in the circuitry and the devices to ensure a safe commutation process.

With reference to the situation shown in Fig. 3, where the bi-directional switches BS1 and BS3 have to be turned off (OFF-Going) and turned on (ON-Going), respectively the switching sequence of the associated switches (switching devices) S1ᵣ, S1_{d}, S3ᵣ, S3_{d} is shown in Fig.4 for the two possible polarities of the output current Io.

More precisely, in the first box of such Figure the switches S are listed and the underlying box shows their initial state, i.e. the reference I indicates the ON or conducting state and the reference 0 indicates the OFF or shut-off state of the relevant device. When the input current Io is positive (>0) the switching sequence is illustrated in the boxes of the left branch whereas when the input current Io is negative (<0) the switching sequence is illustrated in the boxes of the right branch. Both branches converge to the final state after four steps, each of which takes place with a corresponding delay tdl - td4.

From Fig. 4 it can be noticed that, in steady state conditions, when a bi-directional switch BS is on, both its switches are on. This is useful when the output current has to reverse, since no switching are needed. But when a commutation to another input phase is required, the switches have to be turned off and turned on following a proper sequence and consequently an opportune time delay for each step has to be introduced. Therefore, using this commutation strategy the output current cannot reverse when a commutation process is in progress. (Although this might be a minor problem when an output current sensor with good resolution is used, since stopping a current, even an inductive one, at zero crossing does not cause significant overvoltages.)

T. Svensson, M. Alaküla, in "The Modulation and Control of a Matrix Converter Synchronous Machine Drive", Proceedings of EPE'91, vol. 4, pp. 469-476,1991 disclose a two-step commutation strategy based on the output current measurement. When the output current module is larger than a predefined small value δ, only the switch of the BS that carries the current is turned on, so that when a commutation is required a classical overlap commutation method can be applied. When the current module is lower than the δ value both the switches of a bi-directional switch are turned on in order to allow the output current to reverse. This kind of commutation is usually named "inter-switch commutation".

It is to be pointed out that during the inter-switch commutation time interval no phase commutations required by the main control algorithm can take place, because of the relevant short circuit and current interruption hazards. The inter-switch commutation has the effect to introduce a non-linearity region in the modulation of the output voltage, whose extent depends on the value of. δ and the rate of change of the output current fundamental.

In both the above illustrated commutation "strategies", the commutation instant of the output current between two BSs, and hence the change of the input phase voltage applied to the output, is inherently variable. For commutation strategies based on the output current measurement the instant depends on the sign of the voltage across the BSs involved in the commutation. In a dual manner, for commutation strategies based on the input voltages measurement the instant depends on the output current direction. This is to be taken into account when an optimum modulation of the output voltage is desired and a compensation of this variability has to be considered.

It is therefore an object of the present invention to provide a control method for operating a matrix converter for single-stage conversion of AC voltages allowing to reduce the time needed to commutate the output phase between two input phases, and to increase the AC-AC converter linear operating region, without negatively affecting the safety and effectiveness of the commutation.

The invention achieves the above object through a method providing for a 3-step sequence of the bi-directional switches (BSs) when commutating the output phase between two input phases, wherein said bi-directional switches (BSs) are implemented by two unidirectional switches with self-turn-off capability in anti-parallel connection.

More particularly, the control method of the present invention provides for a method for operating a matrix converter as claimed in claim 1 . Additional advantageous features are recited in the dependent claims.

An advantage of the commutation sequence of the present invention is that the output current commutates between the OFF-Going and ON-Going bi-directional switches always at the same instant with respect to the beginning of the commutation process. In this way no compensation is needed with regard to the calculation of the time-connection interval of the output phase to each input line for an optimum output voltage modulation.
Moreover the three step commutation sequence according to the invention allows to set the minimum connection-time interval to an input phase to a value lower than the time needed to the conventional commutation process to finish. This is made possible allowing the target switches state combination of a commutation process to be changed during the process itself. The overall time of this commutation process, named "diverted" commutation, is greater than that of a conventional commutation, but the minimum connection-time interval to the desired input phase is reduced. This represents an improvements for the output voltage modulation.

The invention will now be disclosed hereinbelow with reference to the accompanying drawings illustrating preferred but non limiting embodiments thereof, in which:
Fig. 1 already discussed is a schematic diagram of a multi-input-phase to single-output phase direct AC-AC power converter;
Fig.s 2a and 2b already discussed are a schematic diagrams of two implementations of bi-directional switches;
Fig. 3. schematically illustrates a three-input-phase to single-output-phase direct AC-AC converter that can be controlled through the method of the invention;
Fig. 4, already discussed, illustrate a prior art commutation strategy providing for a four-step switching sequence;
Fig. 5 illustrates a control method according to the present invention.

The control method of the present invention provides for a 3-step sequence of the bi-directional switches (BSs) implemented by two unidirectional switches with self-turn-off capability in anti-parallel connection. For this kind of bi-directional switch, separated internal conduction paths exist in the two possible direction of the output current and these paths can be independently controlled.

With reference to Fig.s 1 and 3, the invention will be illustrated for a three multi-input-phase to single-output-phase direct AC-AC converter such as the one shown in Fig.3. In this configuration, separated internal conduction paths exist in the two possible direction of the output current and these paths can be independently controlled.

Keeping Fig. 1 as reference, let us consider the most left hand side branch of the Fig.3. Before the commutation starts, the output phase is connected to the input phase 1 and it ends connected to the input phase n, at the end of the commutation process. The output current direction is positive (Iₒ > 0) and the sign of the input voltage across phase n and phase 1 is positive, that means Eₙ > E₁.
When the commutation command is given, the switch of BS 1 that is not carrying the output current (S1ᵣ) is firstly turned-off. The time step delay t_{d1} is very short. This time step delay t_{d1} is the (delay) time interval between the instant at which the main control (that is the DSP) delivers the switching command and the instant at which takes place the the status change of the switch gate drivers with respect to the statiobnary status.

The next step consists of turning on the switch of the ON-Going BSn that will carry the output current in the final switches state combination, in this case Sn_{d}. The time step delay t_{d2} is bigger than t_{d1} and its value is set accordingly to the maximum propagation time delay difference of the switches gating circuits. The time delay t_{d2} has to be longer than t_{d1} since under this situation it must be longer than the maximum difference between the propagation delays of the ON and oFF signals in the single switches in order to ensure the desired and mandatory on and off switching sequence. Otherwise stated delay t_{d2} represents the time interval of the "transient" state of the switching sequence.

It is worth noting that at this stage the current commutation between the BS1 and BSn takes place, which means that at the end of this stage the output current is carried by the Sn_{d} switch.
The third and last step consists of turning off the switch still on of the OFF-Going BS1 (S1_{d}) and turning on the switch of the ON-Going BSn that will not carry the current (Snᵣ) at the same time. This is the key point worth noting, the contemporaneity of these two switching commands. It is important to highlight that such contemporaneity does not imply any input short circuit hazard. Although a short circuit current path might become available (S1_{d} and Snᵣ are ON at the same time for a short period) because of the different propagation time delays of the two switching commands, the short circuit current is prevented from flowing by the input voltage across the two switches, which is opposing the short circuit current path.

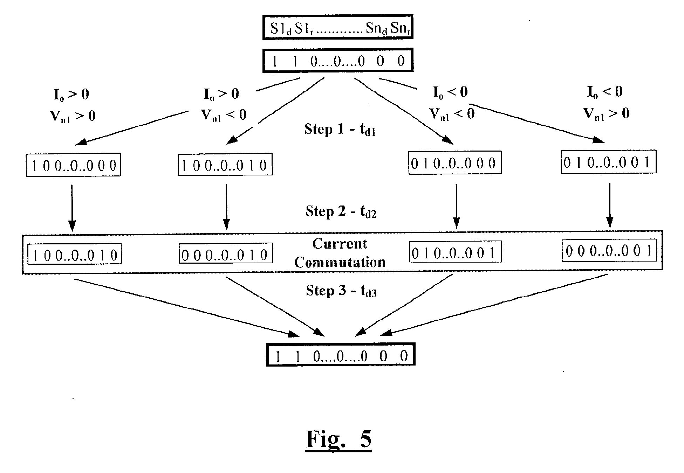

As it can be seen from Fig. 5, the switching sequence changes accordingly to the output current direction and the sign of the input voltage across the two commutating BSs, but it hold the basic idea to simultaneously turn on/off the two switches for which a consequent possible short circuit current is prevent from circulating by the input voltage across the switches.

In accordance with the method of the invention, the 3-step commutation relies on both the measurement of the output current and the input phase voltages. It has to be noted that in vector controlled adjustable speed drives these information would not basically require additional hardware, because they are needed by the main control algorithm and hence already available.
In steady state condition both the switches of the bi-directional switch that connects the output phase to the desired input line are turned on, allowing an "automatic" output current reversal.

When the output phase has to be commutated between two input lines a 3-step switching sequence is applied. The switching pattern is defined accordingly to the output current sign and the input voltage across the BSs involved in the commutation. As for the previously surveyed commutation strategies, when a commutation process is in progress the output current cannot reverse.

In the known methods, the time delay used is constant and it is the same for each step of the sequence. In order to guarantee the desired switching pattern, the delay value is defined taking into account the maximum propagation time delay difference of the switches gating circuits. But bearing in mind that the time required by the commutation process to finish proportionally settles the width of the modulation non-linear operating region, the choice of constant and equal time delay is not the more convenient.

In the proposed three-step commutation strategy different time delay are used for the sequence steps. In detail, the first step time delay is shorter than the other two, which are set equal, and it depends on the clock frequency only. In the method according to the present invention, these time delays do not vary with the output current amplitude as they do in some prior art methods.

Although the invention has been illustrated with reference to preferred embodiments thereof, it is generally subjected to other applications and modifications falling within the scope of the invention, as it will be evident to the skilled of the art.

## Claims

1. A method for operating a matrix converter for single-stage conversion of AC voltages, comprising n input lines (1, 2, ..n) to which corresponding voltages (E1, E2, .. En) are applied and a single output line (U) connected to said n input lines through an array of bi-directional switches (BS1 - BSn), each comprising two unidirectional switches with self-turn-off capability in anti-parallel connection forming separated internal conduction paths in the two possible direction of the output current, said paths being independently controlled, which method provides for subsequently switching said output line (U) from one input phase (1, 2, .. n) to another to obtain a desired output current in the output line,
said method being **characterised in that** when the output line (U) has to be commutated between two input lines (i, j) by operating the associated bi-directional switches (BSi - BSj) so that one (BSi - OFF-going) of said bi-directional switch is turned off and the other (BSj-ON-going) is turned on, a 3-step switching sequence is used, said sequence comprising the steps of:
a) turning off the first inner switch (Si_{r/d}) that is not carrying the output current in the OFF-going bi-directional switch (Bsi) with a first time step delay (t_{d1});
b) turning on the second inner switch (Sjr/_{d}) that will carry the output current in the final switches state combination in the ON-Going bi-directional switch (Bsj) with a second time step delay (t_{d2}) longer than said first delay (t_{d1}) ;
c) simultaneously turning off the second inner switch (Sir/_{d}) in said OFF-Going bi-directional switch (Bsi) and turning on the first inner switch (Sj_{r/d}) of said ON-Going bi-directional switch (Bsj) that will not carry the current at the same time with a third time step delay (t_{d3});
when the sign of the input voltage (ΔV) across the incoming and outgoing input phases the output phase has to switch in between is positive;
a) simultaneously turning off the first inner switch (Si_{r/d}) that is not carrying the output current in the OFF-going bi-directional switch (BSi) and turning on the second inner switch (Sjr/_{d}) that will carry the output current in the final switches state combination in the ON-Going bi-directional switch (BSj) with a first time step delay (t_{d1});
b) turning off the second inner switch (Sjr/_{d}) in said OFF-Going bi-directional switch (BSi) with a second time step delay (t_{d2}) longer than said first delay (t_{d1});
c) turning on the first inner switch (Si_{r/d}) of said ON-Going bi-directional switch (BSj) that will not carry the current in the final switches state combination with a third time step delay (t_{d3});
when the sign of the input voltage (ΔV) across the incoming and outgoing input phases the output phase has to switch in between is negative.

2. A method as claimed in claim 1, **characterised in that** said second delay (t_{d2}) is equal to said third time step delay (t_{d3}).

3. A method as claimed in claim 1 or 2, **characterised by** the additional step of measuring the output current and the n input phase voltages to accomplish said 3-step switching sequence.

4. A method as claimed in claims 1 to 3, **characterised in that** the duration of said second time step delay (t_{d2}) and third time step delay (t_{d3}). are set accordingly to the maximum propagation time delay difference of the switches gating circuits.
